# EUROPEAN PATENT APPLICATION

(11) **EP 3 495 950 A1**
(43) Date of publication of application: **12.06.2019**
(21) Application number: 17842927.0
(22) Date of filing: 23.08.2017
(51) Int. Cl.: G06F 9/50

(54) **METHOD AND DEVICE FOR MANAGING BACKGROUND APPLICATIONS OF TERMINAL**

(30) Priority: 25.08.2016 CN 201610725591
(71) Applicant: Huawei Technologies Co., Ltd., Longgang District Shenzhen, Guangdong 518129 (CN)
(72) Inventor: QIAO, Yonghong, Shenzhen Guangdong 518129 (CN); ZENG, Guangzhu, Shenzhen Guangdong 518129 (CN); YING, Yunjian, Shenzhen Guangdong 518129 (CN)
(74) Representative: Pfenning, Meinig & Partner mbB
(86) International application number: PCT/CN2017/098598
(87) International publication number: WO 2018/036505

(57) **Abstract**

Embodiments of the present invention disclose a terminal background application management method, including: detecting a running status of each of applications running in an operating system background of a terminal; selecting a first target application from the applications, where a running status of the first target application is a preset running status; and allocating a first processing resource of the terminal to the first target application, and setting the first target application to run on the first processing resource, where the first processing resource is greater than a second processing resource that is pre-allocated to the applications in the operating system background of the terminal. The embodiments of the present invention further disclose a terminal background application management apparatus. According to the embodiments of the present invention, the following advantages are achieved: Controllability of a resource occupied by a terminal background application, applicability of terminal background application management, and terminal user experience can be improved.

## Description

### TECHNICAL FIELD

The present invention relates to the field of terminal technologies, and in particular, to a terminal background application management method and apparatus.

### BACKGROUND

Currently, with development of software and hardware technologies of terminals such as mobile phones or tablets, existing terminal operating systems include more operating systems with a multitasking capability. The multitasking function of the operating system can support a plurality of applications to be simultaneously in a start state, and an application in the start state can be switched between a foreground and a background of the operating system for running. In an operation process in which the operating system simultaneously supports running of a plurality of applications, each application is referred to as a task, and a task running in the background occupies a processor resource of a terminal. If a relatively large quantity of background tasks contend for a processor resource with a foreground task, the operating system cannot respond to the foreground task in time. As a result, a foreground application encounters a problem such as frame freezing or a frame loss, and application user experience is affected.

In the prior art, foreground tasks and background tasks are grouped into a foreground group and a background group, and different processor resources are allocated to the different groups. This manner is used to alleviate a problem that a foreground task and a background task contend for a processor resource. However, in the prior art, all the background tasks are put into the background group, and only a few processor resources are allocated to the background group. This greatly limits processor resource occupation of a background task. In this case, if the background tasks include a task that can be obviously perceived by a user, for example, music play, because relatively few processor resources are available to the background tasks, the music play background task cannot run smoothly, for example, encounters a sound stutter. The user can obviously perceive that the background task cannot run smoothly, and consequently terminal user experience is worsened, and applicability is poor.

### SUMMARY

This application provides a terminal background application management method and apparatus, to improve controllability of a resource occupied by a terminal background application, applicability of terminal background application management, and terminal user experience.

According to a first aspect, a terminal background application management method is provided, where the management method may include:
detecting a running status of each of applications running in an operating system background of a terminal;
selecting a first target application from the applications, where the running status of the first target application is a preset running status; and
allocating a first processing resource of the terminal to the first target application, and setting the first target application to run on the first processing resource, where
the first processing resource is greater than a second processing resource that is pre-allocated to the applications in the operating system background of the terminal.

In this application, an application that is in the preset running status and that is in the applications running in the operating system background of the terminal may be determined as a target application, and then more processing resources may be allocated to the target application. More processing resources are allocated to the target application in the background applications, so that resources occupiable by the target application are more than processing resources that are originally allocated to and shared by all the background applications. Therefore, smoother running of the target application can be ensured, and controllability of a running status of the application and terminal user experience can be improved.

With reference to the first aspect, in a first possible implementation, the allocating a first processing resource of the terminal to the first target application includes:
adding the first target application to a target application group of the terminal, and allocating the first processing resource of the terminal to the target application group, where
a quantity of processor cores included in the first processing resource is greater than a quantity of processor cores included in the second processing resource.

In this application, the first target application in the preset running status may be added to the newly-created target application group. All applications included in the target application group are background applications in the preset running status. In this case, application groups included in the terminal may include a foreground application group, the target application group, and a background application group. An application included in the background application group has a lowest smooth-running assurance priority. A smooth-running assurance priority of an application included in the target application group is higher than that of the background application group. A value relationship between the smooth-running assurance priority of the application included in the target application group and a smooth-running assurance priority of an application included in the foreground application group is not limited. The terminal may allocate the first processing resource to the target application group. The quantity of processor cores included in the first processing resource occupiable by the target application group is greater than the quantity of processor cores included in the second processing resource occupiable by the background application group. The quantity of processor cores included in the first processing resource occupiable by the target application group may be less than or equal to a quantity of processor cores included in a processing resource occupiable by the foreground control group. This is not limited herein. If the first processing resource occupiable by the target application group is the same as the processing resource occupiable by the foreground control group, it can be ensured that the smooth-running assurance priority of the application included in the target application group is the same as the smooth-running assurance priority of the application included in the foreground application group. If the smooth-running assurance priority of the application included in the target application group is lower than the smooth-running assurance priority of the application included in the foreground application group, the first processing resource is less than the processing resource occupiable by the foreground control group. A resource allocation manner for the target application group can be used flexibly, so that controllability of a running status of the application included in the target application group can be improved.

With reference to the first aspect, in a second possible implementation, the allocating a first processing resource of the terminal to the first target application includes:
adding the first target application to a foreground application group to which a second target application running in an operating system foreground of the terminal belongs, where the first processing resource is a processing resource of the foreground application group, where
a quantity of processor cores included in the first processing resource is greater than a quantity of processor cores included in the second processing resource.

In this application, the first target application in the preset running status may be added to the foreground application group. All applications included in a target application group are background applications in the preset running status. In this case, application groups included in the terminal may include the foreground application group and a background application group. An application included in the background application group has a lowest smooth-running assurance priority, and therefore a processing resource occupiable by the background control group is less than a processing resource occupiable by the foreground control group. The terminal may allocate, to the target application group, the first processing resource occupiable by the foreground application group. The quantity of processor cores included in the first processing resource occupiable by the target application group is greater than the quantity of processor cores included in the second processing resource occupiable by the background application group. Therefore, it can be ensured that a smooth-running assurance priority of an application included in the target application group is the same as a smooth-running assurance priority of an application included in the foreground application group, smooth running of the application included in the target application group can be ensured, and terminal user experience can be improved.

With reference to the first possible implementation of the first aspect or the second possible implementation of the first aspect, in a third possible implementation, the preset running status includes at least one of a voice play state, a file transfer state, a sensor-in-use state, a video call state, or a voice call state.

In this application, a running status of a background application that can be obviously perceived by a user may be determined as the preset running status, then, a background application in this type of running status may be determined as the first target application, and the first processing resource that is greater than the processing resource shared by the background applications may be allocated to the first target application. Therefore, smooth running of the first target application can be ensured, and terminal user experience can be improved.

With reference to the first possible implementation of the first aspect or the second possible implementation of the first aspect, in a fourth possible implementation, the preset running status is a status in which the first target application is associated with the second target application running in the operating system foreground of the terminal.

In this application, a running status of a background application that is associated with the second target application running in the operating system foreground of the terminal may be determined as the preset running status, and then a background application in this type of running status may be determined as the first target application. Further, the processing resource occupiable by the foreground application group may be allocated to the first target application. Therefore, smooth running of the second target application is ensured by ensuring smooth running of the first target application, and terminal user experience is improved.

With reference to the third possible implementation of the first aspect or the fourth possible implementation of the first aspect, in a fifth possible implementation, after the detecting a running status of each of applications running in an operating system background of a terminal, the method further includes:
detecting a load status of each of processor cores included in the terminal;
when determining that the processor cores include an abnormal processor core, obtaining an abnormal application included in applications running on the abnormal processor core, where load of the abnormal processor core is greater than a first preset load threshold, and a proportion of load of the abnormal application in the load of the abnormal processor core is greater than a preset proportion threshold; and
setting the abnormal application to occupy a third processing resource, where the third processing resource includes first duration in which the abnormal application occupies the abnormal processor core, duration in which another application running on the abnormal processor core occupies the abnormal processor core is second duration, and the first duration is less than the second duration.

In this application, processing resource limit control may be performed on the abnormal application included in the background control group, or management such as freezing or ending may be performed on running of the abnormal application, to avoid a case in which the abnormal application occupies excessively many processing resources and normal running of another application is affected. Therefore, applicability of terminal application management is improved, and terminal user experience is improved.

With reference to the fifth possible implementation of the first aspect, in a sixth possible implementation, a network input/output IO rate of the abnormal application is less than a preset rate threshold.

In this application, the abnormal application may be further located by using the IO rate of the application, so that accuracy of determining the abnormal application and accuracy of controlling running of the application can be improved.

With reference to the sixth possible implementation of the first aspect, in a seventh possible implementation, the first duration is 0; and
the setting the abnormal application to occupy a third processing resource includes:
freezing the abnormal application; or
ending the abnormal application.

In this application, management such as freezing or ending may be performed on the running of the abnormal application included in the background control group. In this way, running of the abnormal application is forcibly ended, to better avoid a case in which the abnormal application occupies excessively many processing resources and normal running of another application is affected. Therefore, applicability of terminal application management is improved, and terminal user experience is improved.

With reference to any one of the first aspect or the first to the seventh possible implementations of the first aspect, in an eighth possible implementation, the terminal described in this application includes one or more multi-core processors;
the first processing resource includes one or more processor cores of each of the one or more multi-core processors;
the second processing resource includes one or more processor cores of each of the one or more multi-core processors; and
the third processing resource includes occupiable duration of each of one or more processor cores.

With reference to the eighth possible implementation of the first aspect, in a ninth possible implementation, the processor provided in this application includes a central processing unit (English: Central Process Unit, CPU), an application processor (English: Application Processor, AP), or the like. The application processor may be specifically a reduced instruction set (English: Reduced Instruction Set Computer, RISC) microprocessor produced by ARM (English: Advanced RISC Machines, ARM), or may be another processor applied to a terminal device such as a mobile phone.

The ARM processor may be a single-core processor or a multi-core processor.

The method provided in this application is applicable to a plurality of types of processors, so that applicability of the terminal background application management method is improved.

According to a second aspect, a terminal background application management apparatus is provided, where the management apparatus may include:
a detection module, configured to detect a running status of each of applications running in an operating system background of a terminal;
a selection module, configured to select a first target application from the applications detected by the detection module, where the running status of the first target application is a preset running status; and
a setting module, configured to: allocate a first processing resource of the terminal to the first target application selected by the selection module, and set the first target application to run on the first processing resource, where
the first processing resource is greater than a second processing resource that is pre-allocated to the applications in the operating system background of the terminal.

With reference to the second aspect, in a first possible implementation, the setting module is specifically configured to:
add the first target application to a target application group of the terminal, and allocate the first processing resource of the terminal to the target application group, where
a quantity of processor cores included in the first processing resource is greater than a quantity of processor cores included in the second processing resource.

With reference to the second aspect, in a second possible implementation, the setting module is specifically configured to:
add the first target application to a foreground application group to which a second target application running in an operating system foreground of the terminal belongs, where the first processing resource is a processing resource of the foreground application group, where
a quantity of processor cores included in the first processing resource is greater than a quantity of processor cores included in the second processing resource.

With reference to the first possible implementation of the second aspect or the second possible implementation of the second aspect, in a third possible implementation, the preset running status includes at least one of a voice play state, a file transfer state, a sensor-in-use state, a video call state, or a voice call state.

With reference to the first possible implementation of the second aspect or the second possible implementation of the second aspect, in a fourth possible implementation, the preset running status is a status in which the first target application is associated with the second target application running in the operating system foreground of the terminal.

With reference to the third possible implementation of the second aspect or the fourth possible implementation of the second aspect, in a fifth possible implementation, the detection module is further configured to:
detect a load status of each of processor cores included in the terminal;
the selection module is further configured to:
   when the detection module determines that the processor cores include an abnormal processor core, obtain an abnormal application included in applications running on the abnormal processor core, where load of the abnormal processor core is greater than a first preset load threshold, and a proportion of load of the abnormal application in the load of the abnormal processor core is greater than a preset proportion threshold; and
   the setting module is further configured to:
      set the abnormal application selected by the selection module to occupy a third processing resource, where the third processing resource includes first duration in which the abnormal application occupies the abnormal processor core, duration in which another application running on the abnormal processor core occupies the abnormal processor core is second duration, and the first duration is less than the second duration.

With reference to the fifth possible implementation of the second aspect, in a sixth possible implementation, a network input/output IO rate of the abnormal application is less than a preset rate threshold.

With reference to the sixth possible implementation of the second aspect, in a seventh possible implementation, the first duration is 0; and
the setting module is specifically configured to:
freeze the abnormal application; or
end the abnormal application.

With reference to any one of the second aspect or the first to the seventh possible implementations of the second aspect, in an eighth possible implementation, the terminal described in this application includes one or more multi-core processors;
the first processing resource includes one or more processor cores of each of the one or more multi-core processors;
the second processing resource includes one or more processor cores of each of the one or more multi-core processors; and
the third processing resource includes occupiable duration of each of one or more processor cores.

With reference to the eighth possible implementation of the second aspect, in a ninth possible implementation, the processor provided in this application includes a central processing unit (English: Central Process Unit, CPU), an application processor (English: Application Processor, AP), or the like. The application processor may be specifically a reduced instruction set (English: Reduced Instruction Set Computer, RISC) microprocessor produced by the ARM (English: Advanced RISC Machines, ARM) Company, or may be another processor applied to a terminal device such as a mobile phone.

The ARM processor may be a single-core processor or a multi-core processor.

According to a third aspect, a terminal is provided, where the terminal may include a storage and a processor, where
the storage is configured to store a group of program code; and
the processor is configured to invoke the program code stored in the storage, to execute the following operations:
detecting a running status of each of applications running in an operating system background of a terminal;
selecting a first target application from the applications, where the running status of the first target application is a preset running status; and
allocating a first processing resource of the terminal to the first target application, and setting the first target application to run on the first processing resource, where
the first processing resource is greater than a second processing resource that is pre-allocated to the applications in the operating system background of the terminal.

With reference to the third aspect, in a first possible implementation, the processor is specifically configured to: the allocating a first processing resource of the terminal to the first target application includes:
add the first target application to a target application group of the terminal, and allocate the first processing resource of the terminal to the target application group, where
a quantity of processor cores included in the first processing resource is greater than a quantity of processor cores included in the second processing resource.

With reference to the third aspect, in a second possible implementation, the processor is specifically configured to: the allocating a first processing resource of the terminal to the first target application includes:
add the first target application to a foreground application group to which a second target application running in an operating system foreground of the terminal belongs, where the first processing resource is a processing resource of the foreground application group, where
a quantity of processor cores included in the first processing resource is greater than a quantity of processor cores included in the second processing resource.

With reference to the first possible implementation of the third aspect or the second possible implementation of the third aspect, in a third possible implementation, the preset running status includes at least one of a voice play state, a file transfer state, a sensor-in-use state, a video call state, or a voice call state.

With reference to the first possible implementation of the third aspect or the second possible implementation of the third aspect, in a fourth possible implementation, the preset running status is a status in which the first target application is associated with the second target application running in the operating system foreground of the terminal.

With reference to the third possible implementation of the third aspect or the fourth possible implementation of the third aspect, in a fifth possible implementation, the processor is further configured to:
detect a load status of each of processor cores included in the terminal;
when determining that the processor cores include an abnormal processor core, obtain an abnormal application included in applications running on the abnormal processor core, where load of the abnormal processor core is greater than a first preset load threshold, and a proportion of load of the abnormal application in the load of the abnormal processor core is greater than a preset proportion threshold; and
set the abnormal application to occupy a third processing resource, where the third processing resource includes first duration in which the abnormal application occupies the abnormal processor core, duration in which another application running on the abnormal processor core occupies the abnormal processor core is second duration, and the first duration is less than the second duration.

With reference to the fifth possible implementation of the third aspect, in a sixth possible implementation, a network input/output IO rate of the abnormal application is less than a preset rate threshold.

With reference to the sixth possible implementation of the third aspect, in a seventh possible implementation, the first duration is 0; and
the setting the abnormal application to occupy a third processing resource includes:
freezing the abnormal application; or
ending the abnormal application.

In this application, an application that is in the preset running status and that is in the applications running in the operating system background of the terminal may be determined as a target application, and then more processing resources may be allocated to the target application. More processing resources are allocated to the target application in the background applications, so that resources occupiable by the target application are more than processing resources that are originally allocated to and shared by all the background applications. Therefore, smoother running of the target application can be ensured, and controllability of a running status of the application can be improved. Further, in this application, processing resource limit control may be performed on the abnormal application included in the background control group, or management such as freezing or ending may be performed on running of the abnormal application, to avoid a case in which the abnormal application occupies excessively many processing resources and normal running of another application is affected. Therefore, applicability of terminal application management is improved, and terminal user experience is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a terminal device applied to an embodiment of the present invention;
FIG. 2 is a schematic diagram of an application management operation according to an embodiment of the present invention;
FIG. 3 is a schematic flowchart of a terminal background application management method according to an embodiment of the present invention;
FIG. 4 is a schematic diagram of CPU resource allocation according to an embodiment of the present invention;
FIG. 5 is another schematic diagram of CPU resource allocation according to an embodiment of the present invention;
FIG. 6 is another schematic diagram of an application management operation according to an embodiment of the present invention;
FIG. 7 is a schematic structural diagram of a computer system according to an embodiment of the present invention; and
FIG. 8 is a schematic structural diagram of a terminal background application management apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A terminal background application management method provided in the embodiments of the present invention is mainly applied to a terminal device. The terminal device may also be referred to as user equipment (English: User Equipment, UE), a mobile station (English: Mobile Station, MS), a mobile terminal (English: Mobile Terminal), or the like. Optionally, the terminal device (briefly referred to as a terminal below) may have a capability of communicating with one or more core networks by using a radio access network (English: Radio Access Network, RAN). For example, the terminal may be a mobile phone (or referred to as a "cellular" phone), or a computer with a mobility feature. For example, alternatively, the terminal may be a portable, pocket-sized, handheld, computer built-in, or in-vehicle mobile apparatus. It should be understood that, in addition to the terminal device, the terminal background application management method provided in the embodiments of the present invention may also be applied to a computer system of another type.

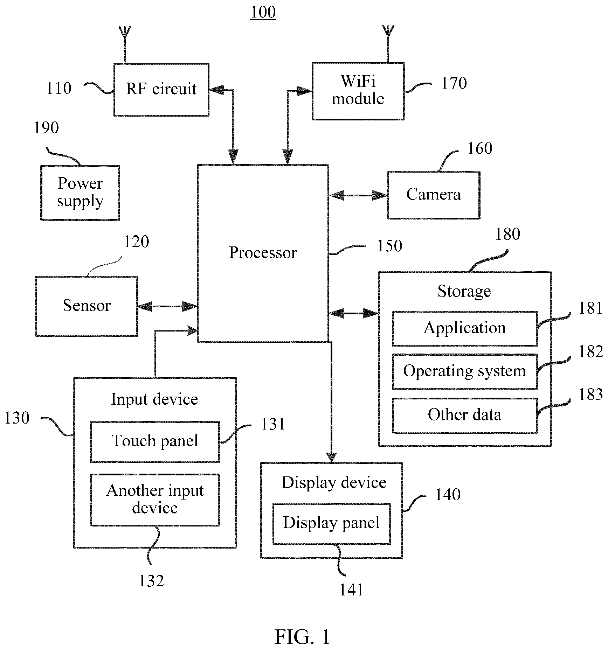

Referring to FIG. 1, FIG. 1 is a schematic structural diagram of a terminal device according to an embodiment of the present invention. As shown in FIG. 1, a terminal device 100 includes a storage 180, a processor 150, and a display device 140. The storage 180 stores a computer program (or referred to as program code), and the computer program includes an operating system program 182, an application 181, and the like. The processor 150 is configured to read the computer program from the storage 180, and then perform a method defined by the computer program. For example, the processor 150 reads the operating system program 182, to run the operating system on the terminal device 100 and implement various functions of the operating system; or reads one or more applications 181, to run the applications on the terminal device.

The processor 150 may include one or more processors. For example, the processor 150 may include one or more central processing units, or include one or more central processing units and one or more application processors. When the processor 150 includes a plurality of processors, the plurality of processors may be integrated on a same chip, or each of the plurality of processors may be an independent chip. One processor may include one or more processor cores (or referred to as processing cores). All the following embodiments are described by using a plurality of cores as an example. However, the terminal background application management method provided in the embodiments of the present invention may also be applied to a single-core processor. A plurality of applications concurrently run by using a time-division working principle of the single-core processor.

In addition, the storage 180 further stores other data 183 in addition to the computer program. The other data 183 may include data generated after the operating system 182 or the application 181 is run. The data includes system data (for example, a configuration parameter of the operating system) and user data. For example, a network song download by a user is typical user data, and an application for downloading the network song is also one of managed objects in the method provided in the embodiments of the present invention.

The storage 180 usually includes a memory and an external storage. The memory may be a random access memory (RAM), a read-only memory (ROM), a cache (CACHE), or the like. The external storage may be a hard disk, an optical disc, a USB flash drive, a floppy disk, a tape drive, or the like. The computer program is usually stored in the external storage. Before performing processing, the processor loads the computer program from the external storage to the memory.

The operating system program 182 includes a computer program that can be used to implement the terminal background application management method provided in the embodiments of the present invention, so that after the processor 150 reads the operating system program 182 and runs the operating system, the operating system may have a background application management function provided in the embodiments of the present invention.

The terminal device 100 may further include an input device 130, configured to: receive input digital information or character information, or a contact touch operation/non-contact gesture, and generate signal input or the like that is related to user settings and function control of the terminal device 100. Specifically, in this embodiment of the present invention, the input device 130 may include a touch panel 131. The touch panel 131 is also referred to as a touchscreen, and can collect a touch operation (such as an operation performed by a user on or near the touch panel 131 by using any appropriate object or accessory such as a finger or a stylus) of the user on or near the touch panel 131, and drive a corresponding connection apparatus according to a preset program. Optionally, the touch panel 131 may include two parts: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into coordinates of a touch point, and then sends the coordinates of the touch point to the processor 150; and can receive and execute a command sent by the processor 150. For example, if the user double taps an icon of an application on the touch panel 131 with a finger, the touch detection apparatus detects a signal brought by the double tap, and then transfers the signal to the touch controller. Then, the touch controller converts the signal into coordinates, and sends the coordinates to the processor 150. The processor 150 performs an operation, for example, starts the application, according to the coordinates and a type (for example, the double tap) of the signal, and finally displays an operation interface of the application on a display panel 141, so as to "start" the application.

The touch panel 131 may be implemented in a plurality of types such as a resistive type, a capacitive type, infrared, and a surface acoustic wave. In addition to the touch panel 131, the input device 130 may further include another input device 132. The another input device 132 may include but is not limited to one or more of a physical keyboard, a function key (such as a volume control key or an on/off key), a trackball, a mouse, a joystick, or the like.

The terminal device 100 may further include the display device 140. The display device 140 includes the display panel 141, configured to display information that is input by the user, information provided to the user, various menu interfaces of the terminal device 100, and the like. In this embodiment of the present invention, the display device 140 is mainly configured to display information such as a user operation interface of an application. The display device 140 may include the display panel 141. Optionally, the display panel 141 may be configured in a form such as a liquid crystal display (English: Liquid Crystal Display, LED) or an organic light-emitting diode (English: Organic Light-Emitting Diode, OLED). In some other embodiments, the touch panel 131 may cover the display panel 141, to form a touch display screen.

In addition, the terminal device 100 may further include a power supply 190 configured to supply power to other modules and a camera 160 configured to photograph a picture or a video. The terminal device 100 may further include one or more sensors 120, such as a gravity sensor, an acceleration sensor, or a light sensor. The terminal device 100 may further include a radio frequency (English: Radio Frequency, RF) circuit 110 configured to perform network communication with a wireless network device, and may further include a WiFi module 170 configured to perform WiFi communication with another device, and the like.

In the following embodiments, a terminal background application management method and apparatus provided in the embodiments of the present invention are described by using a terminal as an execution body. The management method provided in the embodiments of the present invention may be implemented in the operating system program 182 shown in FIG. 1.

In specific implementation, the terminal starts an application (English: application, APP) 1, and if the terminal starts an APP 2 after performing a task in an operating system foreground of the terminal, the APP 1 is switched to an operating system background (briefly referred to as a background below) of the terminal. After being switched to the background, the APP 1 is still in a start state, and may still continue to run a related task in the background. In this case, the APP 1 still occupies a processor resource when running the task. During running of the APP 1 and APP 2, the APP 1 and APP 2 contend for a processor resource. If the APP 1 occupies relatively more processor resources, when the APP 2 runs in the foreground, the APP 2 may encounter a phenomenon such as frame freezing. The processor resource may be specifically a central processing unit (English: Central Process Unit, CPU) resource, an application processor (English: Application Processor, AP) resource, or the like. The application processor resource may be specifically a reduced instruction set (English: Reduced Instruction Set Computer, RISC) microprocessor produced by ARM (English: Advanced RISC Machines, ARM), or may be another processor applied to a terminal device such as a mobile phone. This may be specifically determined according to an actual application scenario requirement, and is not limited herein. The terminal background application management method and apparatus provided in the embodiments of the present invention are described below by using an example in which the CPU resource is a processor resource.

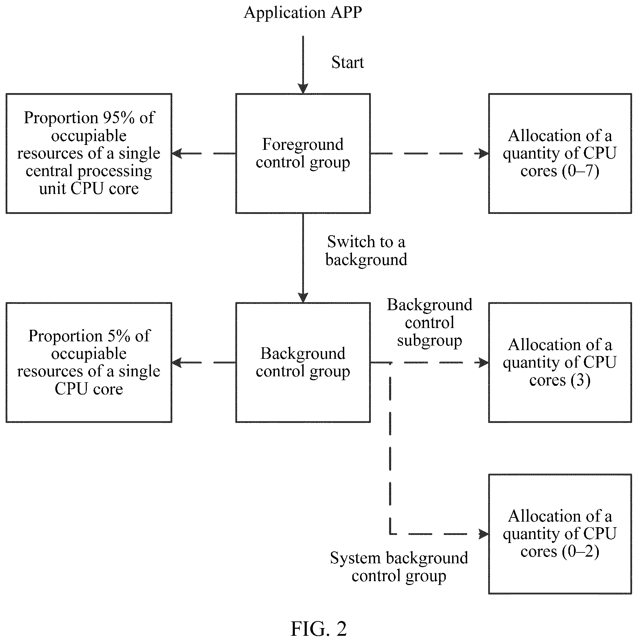

In specific implementation, a foreground-background control mechanism based on a control group (English: Control Group, CGroup) may be used to resolve a problem that a foreground task and a background task contend for a CPU resource. Referring to FIG. 2, FIG. 2 is a schematic diagram of an application management operation according to an embodiment of the present invention. As shown in FIG. 2, according to the foreground-background control mechanism, foreground APPs are put into a foreground control group (English: Foreground CGroup, FG CGroup) (or referred to as a foreground group), all background APPs are put into a background control group (English: Background CGroup, BG CGroup) (or referred to as a background group), and CPU resources are separately allocated to the foreground control group and the background control group. A CPU resource allocated to the foreground control group includes most CPU cores of all processor cores (for example, CPU cores or ARM cores, where the CPU cores are used as an example below) included in a terminal, for example, eight CPU cores numbered from 0 to 7 in FIG. 2. The eight CPU cores numbered from 0 to 7 are CPU cores included in the terminal. In addition, the terminal allocates most resources of each CPU core to the foreground control group. For example, all the CPU cores (the eight CPU cores numbered from 0 to 7) included in the terminal are allocated to the foreground control group, that is, the foreground control group can use resources of all the CPU cores. In addition, 95% of occupiable resources of each CPU core (for example, an occupiable time of the CPU core) may be further allocated to the foreground control group, and so on. Specifically, the background control group may be further divided into a background control subgroup and a system background control group. An APP included in the system background control group is a system APP essential for terminal system running, a factory set APP of the terminal, or the like. The background control subgroup includes a background APP, in the background applications, other than the APP included in the system background control group. In the implementation, relatively few CPU resources, for example, one CPU core (a CPU core numbered 3), are allocated to the background control subgroup, and three CPU cores, for example, three CPU cores numbered 0 to 2 in FIG. 2, are allocated to the system background control subgroup. In addition, all APPs included in the background control group can share only 5% of the occupiable time of the CPU core, or the like. More resources are allocated to an APP included in the foreground control group, to ensure smooth running of the APP in the foreground control group. Therefore, user experience of foreground APP running of the terminal is improved.

However, in the implementation, a case in which a foreground task and a background task may depend on each other, and a phenomenon such as impact that an output result of a background task has on user experience are not considered. In specific implementation, even though some tasks are in the background, output results of the tasks can be perceived by a user in real time. The tasks include voice play and the like. If an output result of a task (assuming that the task is a task A) in the background can be perceived by a user in real time, a system needs to ensure smooth running of the task A. In this scenario, because a background task has relatively few CPU resources in the implementation, it is difficult to ensure smooth running of the task A. If execution of a foreground task needs to depend on a running result of a background task or a background task has a resource required by a foreground task, that is, the foreground task and the background task are associated with each other, unsmooth running of the background task results in unsmooth execution of the foreground task, and the foreground task may encounter a phenomenon such as frame freezing or a frame loss.

To resolve problems in the existing implementation, such as a single CPU resource allocation form, an inflexible operation, and poor applicability of the terminal APP management method, the embodiments of the present invention provide a terminal background application management method and apparatus, to improve controllability of a running status of a terminal background application, applicability of terminal background application management, and terminal user experience.

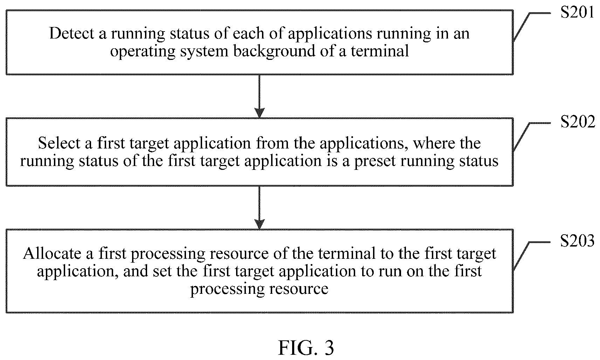

Referring to FIG. 3, FIG. 3 is a schematic flowchart of a terminal background application management method according to an embodiment of the present invention. The management method provided in this embodiment of the present invention includes the following steps.

S201. Detect a running status of each of applications running in an operating system background of a terminal.

In some feasible implementations, in this embodiment of the present invention, distinctive management may be performed on a key APP in the background APPs according to running statuses of the background APPs, to ensure smooth running of the key APP, thereby improving terminal user experience. In specific implementation, the terminal may detect the applications running in the background, to determine the running status of each application. The running status of the application includes whether an output result of the application affects running of a foreground application, that is, whether an application associated with a foreground application exists in the background applications. In addition, the running status of the application may further include whether the output result of the application can be obviously perceived by a user, that is, whether the application is an application whose smooth running needs to be ensured, or the like. Specifically, after an APP (for example, the foregoing APP 1) is switched to the background, the terminal may detect running statuses of the APP 1 and a foreground APP (for example, the foregoing APP 2), to determine whether there is an association relationship between the APP 1 and the APP 2. Alternatively, the terminal may compare the APP 1 with a preset APP type, to determine whether the APP 1 is an application whose smooth running needs to be ensured. Further, the terminal may use a periodical (for example, one period is 10 seconds) detection manner. In a specified time, the terminal detects the running status of each of all the applications running in the system background, to determine whether a target application associated with a foreground application, a target application whose smooth running needs to be ensured, or the like exists in the background applications. The target application associated with a foreground application or the target application whose smooth running needs to be ensured is the key application described in this embodiment of the present invention.

S202. Select a first target application from the applications.

In some feasible implementations, the terminal may detect the background applications, to obtain a target application (that is, the first target application) from the background applications. The first target application is an application whose running status is a preset running status. Specifically, the first target application may include the target application associated with a foreground application, the target application whose smooth running needs to be ensured, or the like. The preset running status may include a voice play state, a file transfer state, a sensor-in-use state, a video call state, a voice call state, or the like. An application in the preset running status may be specified as a target application whose smooth running needs to be ensured. Alternatively, the preset running status may be a status of being associated with a foreground application. An application in the status of being associated with a foreground application may be specified as a target application associated with a foreground. Distinctive management such as CPU resource allocation is performed on the application in the preset running status below with reference to step S203.

S203. Allocate a first processing resource of the terminal to the first target application, and set the first target application to run on the first processing resource.

In some feasible implementations, an application (for example, the foregoing APP 2) running in an operating system foreground of the terminal may be specified as a second target application, that is, an application included in the foregoing foreground control group may be specified as the second target application. All the applications running in the background may be applications included in the foregoing background control group, that is, the first target application may be one or more applications that are classified into the background control group in the prior art. The foreground control group provided in this embodiment of the present invention may occupy some resources of the terminal, for example, all CPU cores of the terminal, and 95% of occupiable duration of each CPU core. The background control group provided in this embodiment of the present invention may also occupy some resources (which are specified as a second processing resource) of the terminal, for example, one of all the CPU cores of the terminal, and 5% of the occupiable duration of the CPU core. The other 95% of the occupiable duration of the CPU core occupied by the background control group is also a resource of the foreground control group, and may also be a resource of the key application provided in this embodiment of the present invention. This may be specifically determined according to an actual application scenario, and is not limited herein.

In some feasible implementations, the terminal may determine, as the first target APP, an APP that is in the background APPs and that is in a running status such as the voice play state, the file transfer state, the sensor-in-use state, the video call state, or the voice call state, and allocate a CPU resource to the first target APP in the running status, to ensure smooth running of the first target APP. In specific implementation, the terminal may create a key background control group (English: key background CGroup, Kbg CGroup), put the first target APP into the key background control group (that is, a target application group), and allocate a CPU resource to the key background control group. In specific implementation, the first target APP may be one or more APPs in the running status such as the voice play state, the file transfer state, the sensor-in-use state, the video call state, or the voice call state. This may be specifically determined according to a specific working status of each APP, and is not limited herein. Correspondingly, the key background control group may include one or more APPs, and an APP included in the key background control group may be the first target APP.

In specific implementation, after determining the first target APP included in the background APPs, the terminal may allocate the CPU resource to the first target APP. Specifically, the terminal may allocate the first processing resource (which may be specifically a first CPU resource) of the terminal to the key background control group according to a status of a CPU resource allocated to the foreground control group and a status of a CPU resource allocated to the background control group. In this embodiment of the present invention, the terminal may have a plurality of CPU cores. The CPU resource allocated to the foreground control group may be all the CPU cores of the terminal, a preset proportion 1 (for example, 95%) of the occupiable duration of each CPU core, and the like. The CPU resource allocated to the background control group may be one (or more) of the CPU cores of the terminal, a preset proportion 2 (for example, 5%) of the occupiable duration of each CPU core, or the like. The first CPU resource allocated by the terminal to the key background control group is fewer than the CPU resource of the foreground control group, but is more than the CPU resource of the background control group. In specific implementation, an APP in the foreground control group has a highest smooth-running assurance priority. Therefore, in the allocation manner of the first CPU resource occupied by the key background control group, smooth running of an APP in the key background control group can be ensured, and further a case in which running of an APP in the foreground control group is affected by resource contention between the APP in the key background control group and the APP in the foreground control group can be avoided. It should be noted that in specific implementation, the terminal may allocate a same CPU resource to the key background control group as the foreground control group. This may be specifically determined according to an actual application scenario requirement, and is not limited herein.

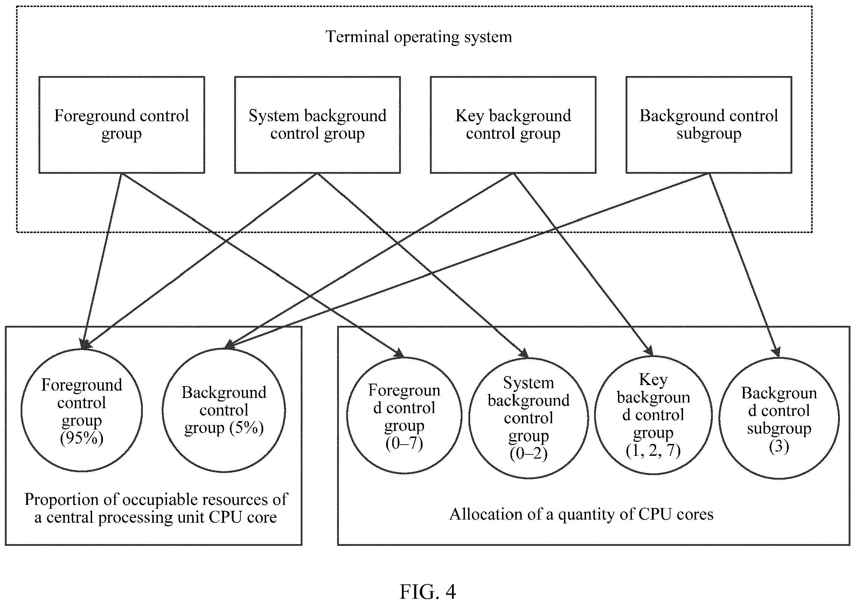

For example, if the terminal allocates one CPU core to the background control group, the terminal may allocate more than one CPU core, for example, two CPU cores or three CPU cores, to the key background control group. In specific implementation, the terminal may further allocate a CPU resource to a system APP. As shown in FIG. 4, FIG. 4 is a schematic diagram of CPU resource allocation according to an embodiment of the present invention. For example, the terminal groups APPs included in a terminal system into APP groups such as a foreground control group, a system background control group (which includes a system APP of the terminal, for example, an APP essential for system running, or a factory set APP of the terminal), a key background control group, and a background control subgroup. If the terminal includes eight CPU cores numbered from 0 to 7, the terminal may allocate the eight CPU cores to the foreground control group, allocate three CPU cores numbered from 0 to 2 to the system background control group, allocate three CPU cores numbered 1, 2, and 7 to the key background control group, and allocate one CPU core numbered 3 to the background control subgroup. CPU core allocation manners such as the quantity of the CPU cores and the CPU core serial number are merely examples rather than exhaustive. The foreground control group has most CPU cores, the system background control group has fewer CPU cores than the foreground control group, the key background control group has fewer CPU cores than the foreground control group, and the background control group has fewest CPU cores. A value relationship between a quantity of CPU cores of the system background control group and that of the key background control group is not limited herein, and may be specifically determined according to an actual application scenario.

Further, as shown in FIG. 4, in some feasible implementations, after the terminal allocates the CPU core resources to the APP control groups, if the APPs included in the APP control groups run on a same CPU core, the terminal may further allocate a resource of the CPU core to the APPs included in the APP control groups. For example, the terminal may record, into the foreground control group, an APP included in the system background control group, and allocate, to the foreground control group and the system background control group, a preset proportion 1 (for example, 95%) of occupiable duration of the CPU core. The terminal may further record the key background control group and the background control subgroup into a background control group, and allocate, to the key background control group and the background control subgroup, a preset proportion 2 (for example, 5%) of the occupiable duration of the CPU core. An APP included in the background control subgroup is an APP, in all the background APPs of the terminal, other than an APP included in the system background control group and an APP included in the key background control group. For example, it is assumed that there are five APPs in total in the system background of the terminal, two APPs are put into the system background control group, and one APP is put into the key background control group. In this case, remaining two APPs are APPs included in the background control group.

Further, in some feasible implementations, if the selected first target APP is an APP associated with a foreground APP (that is, the second target APP), the first target APP may be added to the foreground control group. After the terminal adds the first target APP to the foreground control group, the first target APP may share a CPU resource of the foreground control group with another APP included in the foreground control group. The CPU resource that is of the foreground control group and that is shared by the first target APP with the another APP included in the foreground control group includes resources such as CPU cores of the foreground control group and occupiable duration of each of the CPU cores. Details are not described herein. Because the first target APP is associated with the foreground APP, whether the first target APP runs smoothly greatly affects running of the foreground APP. Therefore, a smooth-running assurance priority of the first target APP should be equal to or slightly lower than that of the foreground APP. The terminal sets the first target APP to share the CPU resource of the foreground control group with the another APP included in the foreground control group, to ensure smooth running of both the first target APP and the foreground APP. Therefore, terminal user experience is improved. It should be noted that in some feasible implementations, when the first target APP is associated with the foreground APP, the terminal may independently create a group (for example, a key background control group) for the first target APP, and allocate a resource to the first target APP in the resource allocation manner for the key background control group. This may be specifically determined according to an actual application scenario requirement, and is not limited herein.

In some feasible implementations, the association relationship between a foreground APP and a background APP of the terminal may be determined according to an association relationship between processes. Specifically, the terminal may collect, in an activity manager service (English: activity manager service, AMS), an association relationship between processes that run in the system, and analyze and determine the association relationship between the processes by using a real-time processing subsystem served by the system. The association relationship between the processes may be determined by using an association relationship collection function such as getContentProvider, startActivity, bindService, unbindService, startService, or stopService. This may be specifically determined according to an actual application scenario, and is not limited herein.

In specific implementation, if the first target APP completes running of a task in the preset running status, the first target APP may be put into the background control group, to prevent the first target APP from occupying a CPU resource. For example, when an APP 4 is in the voice call state, the APP 4 may be put into the key background control group. In this case, a CPU resource occupiable by the APP 4 is the CPU resource of the key background control group. If a voice call of the APP 4 is ended, the APP 4 may be added to the background control subgroup. In this case, a CPU resource occupiable by the APP 4 is the CPU resource of the background control subgroup.

In some feasible implementations, during running of the APPs in the system, the terminal may further detect and manage an abnormal APP in the system. In specific implementation, the terminal may detect, according to a specific period (for example, one period is 10 seconds), a load status of each of all the CPU cores included in the terminal, to determine whether a CPU core with abnormal load (which is specified as an abnormal CPU core) exists in the terminal. If it is detected that load of a CPU core exceeds a first preset load threshold (for example, 80%), the CPU core may be determined as an abnormal CPU core. Further, the terminal may obtain load statuses of APPs that run on the abnormal CPU core, to obtain an abnormal APP on the abnormal CPU core. A proportion of load of the abnormal APP in total load of the abnormal CPU core is greater than a preset proportion threshold. Further, the abnormal APP may be an APP whose network input/output (English: input/output, 10) rate is less than a preset rate threshold. For example, the terminal may determine an APP as the abnormal APP, where a proportion of load of the APP in the total load of the abnormal CPU exceeds 50% within consecutive three periods, and a network IO rate of the APP is less than 10 Kbit/s. In specific implementation, alternatively, the abnormal APP may be an APP at risk of being attacked or the like. This may be specifically determined according to a situation such as an actual application scenario or a software/hardware configuration of the terminal, and is not limited herein.

In some feasible implementations, after detecting the abnormal APP in the terminal, the terminal may control a CPU resource occupiable by the abnormal APP during running. Specifically, the terminal may specify the CPU resource occupiable by the abnormal APP as a third CPU resource. The third CPU resource may be empty, or may be a preset proportion 3 of occupiable duration of the abnormal CPU core. For example, the terminal may specify duration in which the abnormal APP occupies the abnormal CPU core as first duration, and specify duration in which another APP on the abnormal CPU core occupies the abnormal CPU core as second duration, and then, may set the first duration to account for 5% of the occupiable duration of the CPU core, and set the second duration to account for 95% of the occupiable duration of the CPU core.

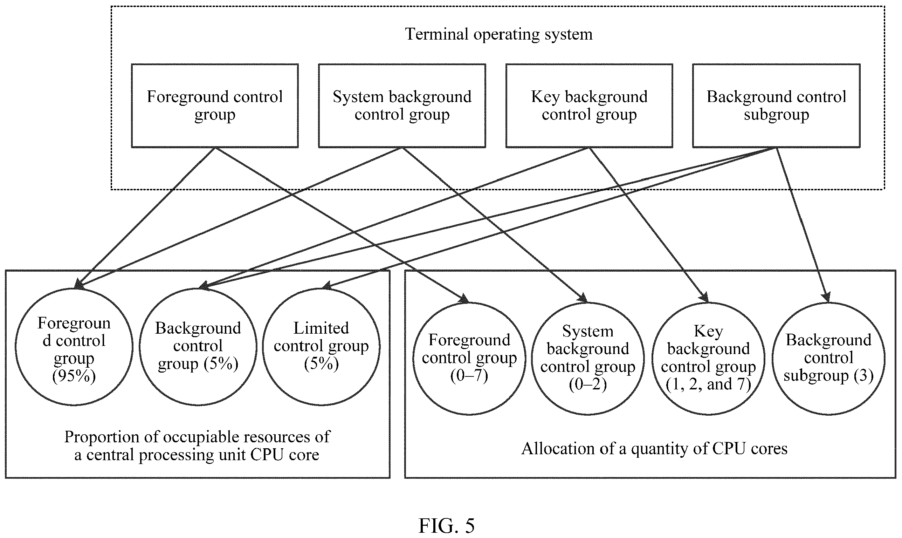

In specific implementation, after detecting the abnormal APP, the terminal may directly freeze or end the abnormal APP. In this case, the third CPU resource occupied by the abnormal APP is empty. In addition, if the abnormal APP needs to receive/send a message, and is also an APP that is commonly used by a user, the abnormal APP may be set to run in the first duration. Therefore, duration in which the abnormal APP can occupy the abnormal CPU core is limited, to control impact that running of the abnormal APP has on running of another APP. As shown in FIG. 5, FIG. 5 is another schematic diagram of CPU resource allocation according to an embodiment of the present invention. If the abnormal APP is an APP that is commonly used by a user, or the abnormal APP needs to receive/send a message, the CPU resource occupiable by the abnormal APP may be set to 5% of the occupiable time of the CPU core. If a time in which the abnormal APP runs on the abnormal CPU core exceeds 5% of an occupiable time of the CPU core in one running period, the abnormal APP needs to exit from the CPU core, to make the CPU core available to another APP, and waits for a next running period.

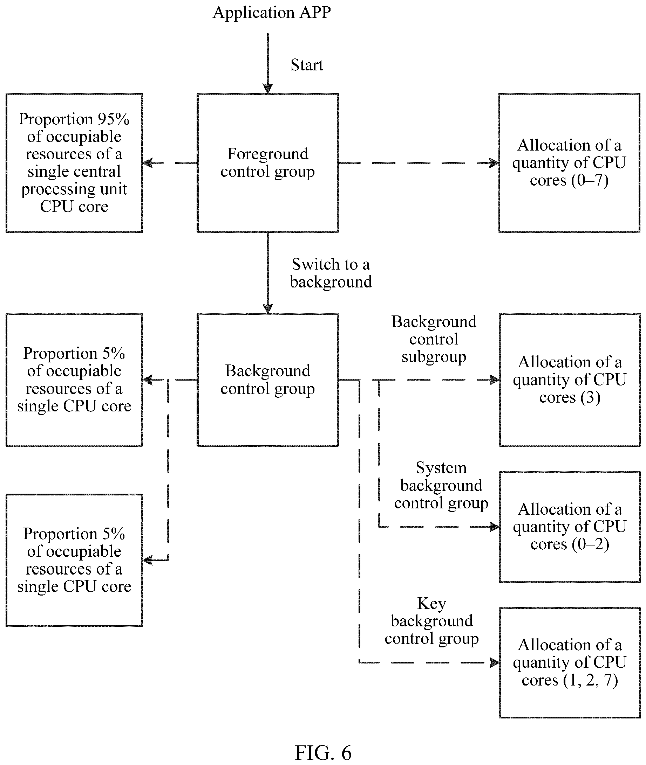

Referring to FIG. 6, FIG. 6 is another schematic diagram of an application management operation according to an embodiment of the present invention. As shown in FIG. 6, in this embodiment of the present invention, a terminal may further create a key background control group in addition to an original background control subgroup and an original system background control group that are included in a background control group, put a key APP in background APPs into the key background control group, and allocate a resource to the key background control group. The key background control group has more resources than the background control subgroup, so that smooth running of an APP included in the key background control group can be ensured, and controllability of a running status of the terminal APP is improved. Further, the terminal may perform CPU resource limit control on an abnormal APP included in the background control group (for example, the abnormal APP can occupy 5% of resources of a single CPU core) or perform management such as freezing or ending on running of an abnormal APP (a CPU resource occupied by the abnormal APP is empty), to avoid a case in which the abnormal APP occupies excessively many CPU resources and normal running of another APP is affected. Therefore, applicability of terminal APP management and terminal user experience are improved.

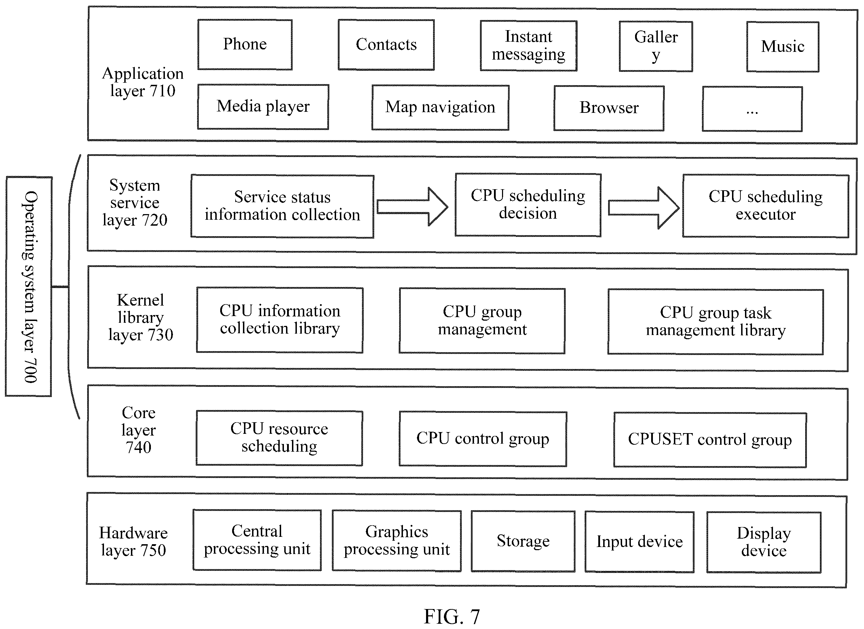

A specific procedure of the method provided in the embodiments of the present invention is mainly described above. An implementation location and a running status of the method provided in the embodiments of the present invention are described below with reference to FIG. 7 and by using an Android operating system as an example. For a more specific method procedure, refer to the foregoing embodiments.

Referring to FIG. 7, FIG. 7 is a schematic structural diagram of a computer system according to an embodiment of the present invention. The computer system may be the terminal device provided in the foregoing embodiments of the present invention, or may be a computer device of another type. The computer system includes an application layer 710, an operating system layer 700, and a hardware layer 750.

The operating system may be an Android operating system, or may be another operating system applicable to the method provided in the embodiments of the present invention. This is not limited herein. The operating system layer 450 is further divided into a system service layer 720, a kernel library layer 730, and a core layer 740. The operating system layer 700 in FIG. 7 may be considered as a specific implementation of the operating system 182 in FIG. 1. The system service layer 720 includes service status information collection, CPU scheduling decision, a CPU scheduling executor, and the like. It should be noted that FIG. 7 is a schematic diagram in which a CPU is used as an example. In specific implementation, the CPU may be replaced with ARM. This may be specifically determined according to an actual application, and is not limited herein. The kernel library layer 730 includes a CPU information collection library, CPU group management, a CPU group task management library, and the like. The core layer 740 may include CPU resource scheduling, a CPU control group, a CPUSET control group, and the like.

In some feasible implementations, the service status information collection in the system server layer 720 is used to collect service status information of each application in the application layer 710. The service status information of each application includes a foreground-background attribute change of the application during foreground running and background running, a running status change such as running or ending of the application, and the like. In this embodiment of the present invention, a first target application in a preset running status in system background applications may be obtained by using the service status information collection in the system service layer 720, and then a first processing resource to be allocated to the first target application may be determined by using the CPU scheduling decision in the system service layer 720. The CPU scheduling decision in the system service layer 720 is used to determine, according to the application status information collected by the application status information collection module, a CPU resource to be allocated to the first target application. The CPU scheduling executor in the system service layer 720 is configured to set, according to the CPU resource that is determined by the CPU scheduling decision module and that is to be allocated to the first target application, a CPU resource occupiable by an application process corresponding to the first target application. The CPU resource includes an occupiable CPU core, occupiable duration of a single CPU core, and the like. Further, after setting the CPU resource occupiable by the application process corresponding to the first target application, the CPU scheduling executor may allocate and schedule the CPU resource by using the modules at the kernel library layer 730 and the core layer 740.

In specific implementation, the CPU information collection library included at the kernel library layer 730 is used to provide CPU information such as a CPU load status to the system service layer 720. When determining the CPU resource to be allocated to the first target application, the CPU scheduling decision module may determine, according to a load status that is of each CPU core and that is provided by the CPU information collection library, a CPU core (which may be specifically one or more CPU cores) to be allocated to the first target application, and then may execute a CPU decision by using the CPU scheduling executor. The CPU group management at the kernel library layer 730 may perform, according to a CPU resource allocation manner that is set by the CPU scheduling executor, group management on CPU cores included in the system, and then perform task management on a CPU core in each CPU group (which may be specifically a CPU core group) by using the CPU group task management library. The CPU group management is used to: allocate CPU cores (that is, all the CPU cores included in the system) to a foreground control group, or allocate one CPU core included in the system to a background control group, or allocate one or more of the CPU cores included in the system to a key background control group, and so on, so that the CPU cores can be grouped. The CPU core task management includes application process management such as increasing or decreasing a quantity of application processes running on each CPU core.

Further, the CPU control group at the core layer 740 may control and manage an occupiable time of each CPU core according to a status of task management performed by the CPU group task management library on each CPU core. For example, an application included in the foreground control group may occupy 95% of the occupiable duration of each CPU core, and an application included in the background control group may occupy 5% of occupiable duration of a CPU core occupiable by the application. If a CPU core (for example, the foregoing abnormal CPU core) with abnormal task allocation exists in a process in which the CPU group task management library performs task management on each CPU core, the CPU control group may control an abnormal application to occupy 5% of occupiable duration of the abnormal CPU core, and so on. The CPUSET control group is used to control a CPU core included in each CPU group allocated by the CPU group management. The CPU resource scheduling execution determined by the CPU scheduling executor may be controlled by using the CPUSET control group, and finally a CPU at the hardware layer 750 is scheduled by using the CPU resource scheduling. The CPU resource scheduling is used to execute a control instruction according to the CPU control group and the CPUSET control group, so as to schedule the central processing unit at the hardware layer 750.

Further, as shown in FIG. 7, the application layer 710 of a terminal may include a phone, contacts (that is, an address book), instant messaging, a gallery, music, a media player, map navigation, a browser, and the like. The application layer 710 in FIG. 7 may be considered as a specific implementation of the application 181 in FIG. 1. This is not limited herein. The hardware layer 750 of the terminal includes the central processing unit (that is, the CPU), a graphics processing unit, a storage, an input device, a display device, and the like. The central processing unit and the graphics processing unit may be equivalent to specific implementations of the processor 150 in FIG. 1. The storage may be equivalent to the storage 180 in FIG. 1, and includes a memory and an external storage. The input device in FIG. 7 may be equivalent to the input device 132 in FIG. 1. The display device 455 in FIG. 7 may be equivalent to the display device 140 in FIG. 1, such as a liquid crystal display (English: Liquid Crystal Display, LCD), a holographic (English: Holographic) imaging device, or a projector (English: Projector). Certainly, in addition, the hardware layer 750 may further include one or more sensors (equivalent to the sensors 120 in FIG. 1). The hardware layer 750 may further include the power supply, the camera, the RF circuit, and the WiFi module that are shown in FIG. 1, and may further include other hardware modules that are neither shown in FIG. 1, for example, a memory controller and a display controller. This is not limited herein.

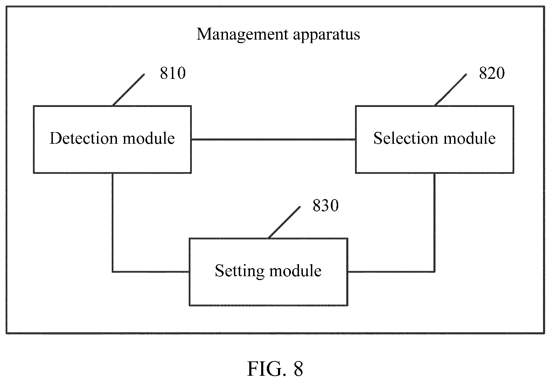

Referring to FIG. 8, FIG. 8 is a schematic structural diagram of a terminal background application management apparatus according to an embodiment of the present invention. The management apparatus provided in this embodiment of the present invention includes:
a detection module 810, configured to detect a running status of each of applications running in an operating system background of a terminal;
a selection module 820, configured to select a first target application from the applications detected by the detection module 810, where the running status of the first target application is a preset running status; and
a setting module 830, configured to: allocate a first processing resource of the terminal to the first target application selected by the selection module 820, and set the first target application to run on the first processing resource.

The first processing resource is greater than a second processing resource that is pre-allocated to the applications in the operating system background of the terminal.

In some feasible implementations, the setting module 830 is specifically configured to:
add the first target application to a target application group of the terminal, and allocate the first processing resource of the terminal to the target application group.

A quantity of processor cores included in the first processing resource is greater than a quantity of processor cores included in the second processing resource.

In some feasible implementations, the setting module 830 is specifically configured to:
add the first target application to a foreground application group to which a second target application running in an operating system foreground of the terminal belongs, where the first processing resource is a processing resource of the foreground application group.

A quantity of processor cores included in the first processing resource is greater than a quantity of processor cores included in the second processing resource.

In some feasible implementations, the preset running status includes at least one of a voice play state, a file transfer state, a sensor-in-use state, a video call state, or a voice call state.

In some feasible implementations, the preset running status is a status in which the first target application is associated with the second target application running in the operating system foreground of the terminal.

In some feasible implementations, the detection module 810 is further configured to:
detect a load status of each of processor cores included in the terminal.

The selection module 820 is further configured to:
when the detection module determines that the processor cores include an abnormal processor core, obtain an abnormal application included in applications running on the abnormal processor core, where load of the abnormal processor core is greater than a first preset load threshold, and a proportion of load of the abnormal application in the load of the abnormal processor core is greater than a preset proportion threshold.

The setting module 830 is further configured to:
set the abnormal application selected by the selection module to occupy a third processing resource, where the third processing resource includes first duration in which the abnormal application occupies the abnormal processor core, duration in which another application running on the abnormal processor core occupies the abnormal processor core is second duration, and the first duration is less than the second duration.

In some feasible implementations, a network input/output IO rate of the abnormal application is less than a preset rate threshold.

In some feasible implementations, the first duration is 0.

The setting module 830 is specifically configured to:
freeze the abnormal application; or
end the abnormal application.

In specific implementation, the management apparatus may perform, by using the modules built in the management apparatus, implementations described in the steps in the terminal background application management method provided in the embodiments of the present invention. For details, refer to the foregoing embodiments. Details are not described herein again.

In this embodiment of the present invention, the terminal may allocate a resource to a target application group (for example, a key background control group) to which a background application in the preset running status belongs. The key background control group has more resources than a background control subgroup, so that smooth running of a target APP included in the key background control group can be ensured, and controllability of a running status of the terminal APP is improved. Further, the terminal may perform CPU resource limit control on the abnormal APP included in a background control group (for example, the abnormal APP can occupy 5% of resources of a single CPU core) or perform management such as freezing or ending on running of the abnormal APP (a CPU resource occupied by the abnormal APP is empty), to avoid a case in which the abnormal APP occupies excessively many CPU resources and normal running of another APP is affected. Therefore, applicability of terminal APP management and terminal user experience are improved.

In the specification, claims, and accompanying drawings of the present invention, the terms "first", "second", "third", "fourth", and the like are intended to distinguish between different objects but do not indicate a particular order. In addition, the terms "include", "have", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the system, the product, or the device.

A person of ordinary skill in the art may understand that all or some of the processes of the method in the embodiments may be implemented by a computer program instructing relevant hardware. The program may be stored in a computer readable storage medium. When the program is executed, the processes of the method in the embodiments are performed. The storage medium may be a magnetic disk, an optical disc, a read-only memory (Read-Only Memory, ROM), a random access memory (Random Access Memory, RAM), or the like.

What is disclosed above is merely example embodiments of the present invention, and certainly is not intended to limit the protection scope of the present invention. Therefore, equivalent variations made in accordance with the claims of the present invention shall fall within the scope of the present invention.

## Claims

1. A terminal background application management method, comprising:
detecting a running status of each of applications running in an operating system background of a terminal;
selecting a first target application from the applications, wherein the running status of the first target application is a preset running status; and
allocating a first processing resource of the terminal to the first target application, and setting the first target application to run on the first processing resource, wherein
the first processing resource is greater than a second processing resource that is pre-allocated to the applications in the operating system background of the terminal.

2. The management method according to claim 1, wherein the allocating a first processing resource of the terminal to the first target application comprises:
adding the first target application to a target application group of the terminal, and allocating the first processing resource of the terminal to the target application group, wherein
a quantity of processor cores comprised in the first processing resource is greater than a quantity of processor cores comprised in the second processing resource.

3. The management method according to claim 1, wherein the allocating a first processing resource of the terminal to the first target application comprises:
adding the first target application to a foreground application group to which a second target application running in an operating system foreground of the terminal belongs, wherein the first processing resource is a processing resource of the foreground application group, wherein
a quantity of processor cores comprised in the first processing resource is greater than a quantity of processor cores comprised in the second processing resource.

4. The management method according to claim 2 or 3, wherein the preset running status comprises at least one of a voice play state, a file transfer state, a sensor-in-use state, a video call state, or a voice call state.

5. The management method according to claim 2 or 3, wherein the preset running status is a status in which the first target application is associated with the second target application running in the operating system foreground of the terminal.

6. The management method according to claim 4 or 5, wherein after the detecting a running status of each of applications running in an operating system background of a terminal, the method further comprises:
detecting a load status of each of processor cores comprised in the terminal;
when determining that the processor cores comprise an abnormal processor core, obtaining an abnormal application comprised in applications running on the abnormal processor core, wherein load of the abnormal processor core is greater than a first preset load threshold, and a proportion of load of the abnormal application in the load of the abnormal processor core is greater than a preset proportion threshold; and
setting the abnormal application to occupy a third processing resource, wherein the third processing resource comprises first duration in which the abnormal application occupies the abnormal processor core, duration in which another application running on the abnormal processor core occupies the abnormal processor core is second duration, and the first duration is less than the second duration.

7. The management method according to claim 6, wherein a network input/output IO rate of the abnormal application is less than a preset rate threshold.

8. The management method according to claim 7, wherein the first duration is 0; and the setting the abnormal application to occupy a third processing resource comprises:
freezing the abnormal application; or
ending the abnormal application.

9. A terminal background application management apparatus, comprising:
a detection module, configured to detect a running status of each of applications running in an operating system background of a terminal;
a selection module, configured to select a first target application from the applications detected by the detection module, wherein the running status of the first target application is a preset running status; and
a setting module, configured to: allocate a first processing resource of the terminal to the first target application selected by the selection module, and set the first target application to run on the first processing resource, wherein
the first processing resource is greater than a second processing resource that is pre-allocated to the applications in the operating system background of the terminal.

10. The management apparatus according to claim 9, wherein the setting module is specifically configured to:
add the first target application to a target application group of the terminal, and allocate the first processing resource of the terminal to the target application group, wherein
a quantity of processor cores comprised in the first processing resource is greater than a quantity of processor cores comprised in the second processing resource.

11. The management apparatus according to claim 9, wherein the setting module is specifically configured to:
add the first target application to a foreground application group to which a second target application running in an operating system foreground of the terminal belongs, wherein the first processing resource is a processing resource of the foreground application group, wherein
a quantity of processor cores comprised in the first processing resource is greater than a quantity of processor cores comprised in the second processing resource.

12. The management apparatus according to claim 10 or 11, wherein the preset running status comprises at least one of a voice play state, a file transfer state, a sensor-in-use state, a video call state, or a voice call state.

13. The management apparatus according to claim 10 or 11, wherein the preset running status is a status in which the first target application is associated with the second target application running in the operating system foreground of the terminal.

14. The management apparatus according to claim 12 or 13, wherein the detection module is further configured to:
detect a load status of each of processor cores comprised in the terminal;
the selection module is further configured to:
when the detection module determines that the processor cores comprise an abnormal processor core, obtain an abnormal application comprised in applications running on the abnormal processor core, wherein load of the abnormal processor core is greater than a first preset load threshold, and a proportion of load of the abnormal application in the load of the abnormal processor core is greater than a preset proportion threshold; and
the setting module is further configured to:
set the abnormal application selected by the selection module to occupy a third processing resource, wherein the third processing resource comprises first duration in which the abnormal application occupies the abnormal processor core, duration in which another application running on the abnormal processor core occupies the abnormal processor core is second duration, and the first duration is less than the second duration.

15. The management apparatus according to claim 14, wherein a network input/output IO rate of the abnormal application is less than a preset rate threshold.

16. The management apparatus according to claim 15, wherein the first duration is 0; and the setting module is specifically configured to:
freeze the abnormal application; or
end the abnormal application.
